(19) **Europäisches Patentamt / European Patent Office / Office européen des brevets**

(11) **EP 3 321 395 A1**

(12) **EUROPEAN PATENT APPLICATION**

(43) Date of publication:
**16.05.2018 Bulletin 2018/20**

(21) Application number: **17201335.1**

(22) Date of filing: **13.11.2017**

(51) Int Cl.:
*C25B 1/26* (2006.01)  *C25B 1/02* (2006.01)
*C25B 15/02* (2006.01)  *C02F 1/467* (2006.01)
*C02F 1/461* (2006.01)  *C02F 103/42* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.11.2016 FR 1660974**

(71) Applicant: **Fluidra Industry France**
**66000 Perpignan (FR)**

(72) Inventor: **LOPEZ CHASARRA, Serge**
**66000 PERPIGNAN (FR)**

(74) Representative: **Herrero & Asociados, S.L.**
**Cedaceros, 1**
**28014 Madrid (ES)**

(54) **METHOD FOR DETERMINING THE SERVICE LIFE STATUS OF THE ELECTRODES OF A SALT WATER CHLORINATOR AND SALT WATER CHLORINATION SYSTEM INCLUDING A CHLORINATOR WITH CONTROL OF THE SERVICE LIFE STATUS OF THE ELECTRODES BASED ON SAID METHOD**

(57) The present invention relates to a method for determining the service life status of the electrodes used in a salt water chlorinator for the purpose of replacing them before their deactivation, and to a system incorporating a salt water chlorinator with control of the service life status of the electrodes based on said method, where said method includes the steps of interrupting the electric power supply of the chlorinator and measuring the value of the remaining voltage VRN in the electrodes at the beginning of their service life, storing said value, measuring said remaining voltage VR every so often and comparing the remaining voltage initially saved with the remaining voltage subsequently obtained for the purpose of generating an alarm signal indicating the need to replace the electrodes at the time in which the ratio of both measurements has a given value.

**Description**

Object of the Invention

The present invention relates to a method for determining the service life status of the electrodes used in a salt water chlorinator for the purpose of replacing them before their deactivation in the most cost-efficient manner possible. The present invention also relates to a salt water chlorination system incorporating a salt water chlorinator with control of the service life status of the electrodes based on said method.

Background of the Invention

It is known that chlorine compounds can be obtained in the electrochemical industry from the electrolytic dissociation of different chlorine salts dissolved in water. This process is being widely used in many industrial processes and a number of technical fields, such as in waste treatment, health, agriculture, etc.

In recent years, one of the fields in which the use of salt water chlorination has increased is in the disinfection of swimming pool water, where it holds significant advantages over the old techniques of directly dissolving chlorine in the water, one of such advantages being the capacity to control the process and avoid the addition of solid chlorine tablets or liquid sodium hypochlorite. Instead, only table salt or NaCl is used.

Specifically, the salt water chlorinators of the type referred to by the invention include an electrolysis cell or electrolytic cell for electrolyzing chlorine salts dissolved in the water. Therefore, the chlorine produced in the anode reacts in the water with the sodium hydroxide NaOH produced in the cathode to form sodium hypochlorite NaClO ions as a sterilizing agent, as well as hydrogen gas $H_2$.

More specifically, salt water chlorinators commonly use an array of electrodes immersed in the water to be purified, said electrodes having an electric charge between them which creates the anodic-cathodic reaction breaking up the salt molecules and making the chemical reaction generally shown below possible:

$$2\ NaCl + 2\ H_2O = Cl_2 + H_2 + 2\ NaOH$$

However, these chlorinators have the drawback that calcium salts are deposited on the cathode, which leads to scaling, thereby reducing the cell's chlorine production efficiency. In the past, this problem was solved by periodically cleaning the cell manually or automatically with the help of an acid, where both cases required consumers to handle said acid, which was generally not acceptable for the user. Another method described in patent document WO201132212 provides a mechanical solution to the problem of removing scaling from the cathode. In other words, the scaling is physically scraped off the surface of the cathode.

Today, the most common solution for solving this problem is to periodically reverse the polarity of the electrodes, which consists of subjecting the electrodes to a cyclical potential reversal, alternating their use as cathodes and as anodes. The calcium salt deposition deposited on the surface of an electrode under cathodic operation therefore dissolves away during subsequent operation as an anode when the reaction environment tends to be acidified.

The operation of the electrodes under alternating polarization conditions allows efficient operation, keeping the surface of the electrode sufficiently cleaned of insoluble depositions. Nevertheless, the cathodic operation in electrode configurations of this type entails an operating service life that is shorter than the optimal service life because adherence of the coating to the substrate of the electrode tends to be hindered in these conditions.

So this working method based on alternating polarity, together with the intrinsic features of electrodes, cause a sudden failure without any significant premonitory sign. Therefore, to avoid serious drawbacks, the residual service life of the electrodes in a cell is estimated today in order to replace them before a sudden and irreversible failure occurs. The time at which this replacement must occur is calculated on a statistical basis by simply counting the number of hours that the chlorinator has been in service.

One of the main drawbacks of this method is the cost, since the deactivation of the electrodes working under operating conditions is affected by several factors (power, parameters of the water, temperature, etc.), whereby the variability thereof is fairly high, so to maintain a margin of safety such that they are removed before the failure entails replacing electrodes that could have still been operating for a significant time.

In this case, even the compilation of historical data about many cells may not be very useful in predicting the residual service life of the electrodes due to the heavy dependence on the type of requirements to which they have been subjected, which vary depending on the needs of each individual user.

On the other hand, the use of an electrode beyond its service life drastically reduces the efficiency of the process of generating chlorine, which leads to the impossibility of generating chlorine and forces the power electronics to deliver more energy. For these reasons, users normally choose to replace them sooner rather than force the electrode to reach the end of its service life.

In view of the foregoing, the need to provide a method for predicting the deactivation of the electrodes, as well as the subsequent need to schedule the replacement thereof so that it can occur as close as possible to the real end of their service life for the purpose of reducing costs, have been demonstrated.

In the state of the art, it is also known that before the deactivation of the electrodes, there is a sudden increase in the cell voltage, such that there are also systems monitoring said voltage by means of a sensor and comparing the value with a data set of critical values stored as a function of the concentration of the electrolyzed solution and of the current density applied, giving off a warning provided that said difference in potential is greater than the corresponding critical value.

However, these systems are not optimal because they do not take into account the fact that the increase in voltage can be caused by lime, scaling, changes in water conductivity, etc., so this measurement is not a reliable parameter for unequivocally defining the remaining service life of an electrode.

Finally, patent document WO2011/157811 shows that an electrode can be manufactured with an internal catalytic coating and an external catalytic coating of different composition for obtaining a two-step deactivation mechanism, with a first increase in voltage with respect to the normal operating voltage but still suitable for continuing to operate, and a second, quicker increase in voltage forcing its definitive shut-down.

This has the advantage of improving sensitivity of the comparison and efficacy of the warning system, which must be activated only after deactivation of the external catalytic layer, but before deactivation of the internal one, which has to work during a sufficient time so as to allow scheduling the replacement of the electrodes.

This method, however, continues to suffer from significant drawbacks, since it involves a period with lower efficiency, as well as the need to take into account and quantify increases in voltage due to external conditions. Likewise, it fails to predict the imminent end of the service life of the electrode and to inform the user with sufficient time in order to assure the purveyance of a new electrode, where it is made to work in rather inefficient conditions or the generation of chlorine has to be shut down during the period required for purveyance of the new electrode.

For the purpose of overcoming these drawbacks and providing a reliable and cost-effective tool for evaluating the conditions of the electrodes of a chlorinator, a new chlorination method and system are described below.

Description of the Invention

The present invention proposes a method for determining the status of the electrodes of a salt water chlorinator for the purpose of providing the user with reliable information about the remaining service life of the electrodes so that they can be replaced in the most cost-effective manner possible. Likewise, the present invention also relates to a system including a salt water chlorinator with control of the service life status of the electrodes based on said method.

According to the present invention, a salt water chlorinator (for example, for a swimming pool) is provided, where said salt water chlorinator includes an electrolysis cell in which the electrodes, formed by a metallic or polymeric plate or a set of these plates with or without a metallic or conductive coating, are completely or partially immersed in water or in another similar liquid, which has salts dissolved in it.

To electrolyze the chloride salts in the water and generate chlorine in the anode of the electrolysis cell, the electrodes are supplied with electric power to transfer electric energy to the salt water solution and create the dissociation of the ions and cations. Furthermore, the polarity in the poles of the electrode changes in an alternating manner for the purpose of minimizing the deposition of scaling and thereby increasing the service life expectancy, as discussed above.

This electric energy supplied to the electrodes is usually done at a constant current, being connected and disconnected cyclically during periods lasting from several seconds to minutes, following an on-off time ratio according to chlorine production needs.

More specifically, the production time during which the chlorinator is working, i.e., the time during which the electrodes are working, is determined by the volume of liquid to be treated, for example, the volume of the swimming pool. Therefore, for a given volume of water it will be necessary to supply a specific amount of current, which is usually specified by the manufacturer.

However, this production of the chlorinator is not usually performed all at once at 100% yield so as to not force the installation and to lengthen the service life of the electrodes. On the other hand, attempting to lengthen the service life of said electrodes by providing a current below the rated value is counterproductive, because precisely doing this in that manner can cause an even more premature aging thereof.

As a result, instead of regulating chlorine production by varying the power delivered, i.e., by supplying a larger or smaller amount of current to produce more or less chlorine, regulation is carried out at a constant current, but playing with the delivery time of said current. In other words, the current is always supplied with the same value but following an intermittent pattern over time instead of supplying it to the chlorinator continuously and in one go.

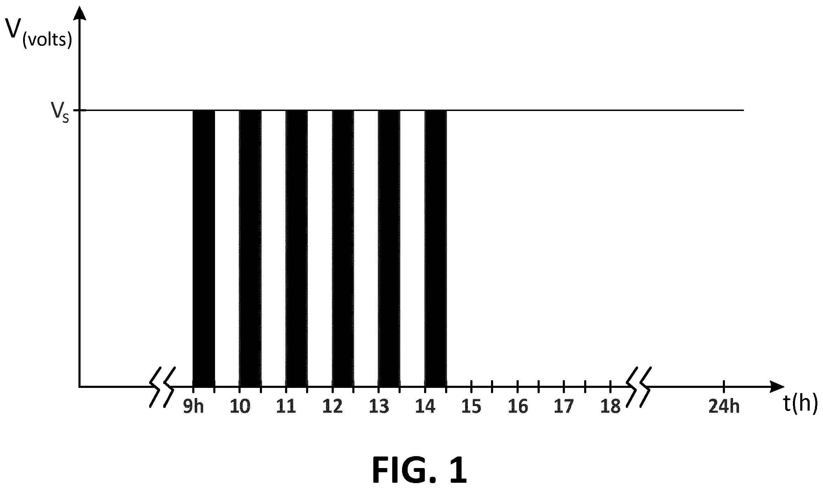

A schematic example of this can be seen in Figure 1, where a work pattern of that type is shown. Specifically, by imaging that for a given volume of water it is necessary to supply a specific amount of current specified by the manufacturer during a total time of 3 hours, the supply is performed by connecting the electrodes to and disconnecting them from the electric power supply in a cyclical manner every ½ hour, which would mean that said current would be delivered integrally to the system in a total of 6 hours. In other words, the salt water chlorinator will start operating every half hour, being disconnected for another half hour during a total time of 6 hours.

Under these work conditions, the inventors have surprisingly observed that right after disconnecting the voltage or electric power supply, the remaining voltage between electrodes, which lasts for milliseconds, has a value that depends on the age thereof.

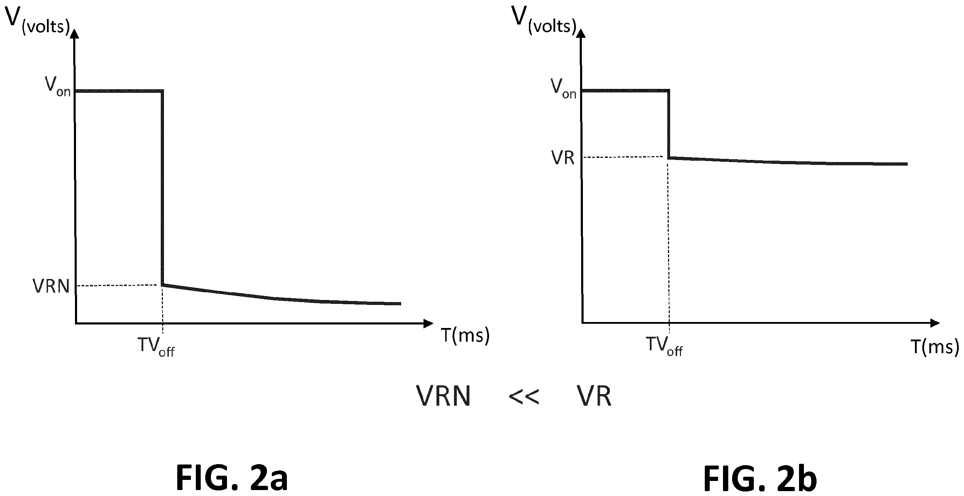

More specifically, as can be seen in Figure 2a, for the case in which the electrodes have a good status, the remaining voltage in the electrodes VRN right at the time of interrupting the electric power supply thereof, due to an intermittent supply pattern such as that of Figure 1, for example, decreases suddenly to a very small voltage compared with the supply voltage Von. After that, said remaining voltage decreases slowly over time.

However, as can be seen in Figure 2b, for the case in which the electrodes are old and have many hours of operation, the remaining voltage in the electrodes VR right at the time of interrupting the electric power supply thereof, due to an intermittent supply pattern such as that of Figure 1, for example, also decreases suddenly, but this time only to the value of the voltage of the electrolyte, which depends on the geometric configuration of the electrode, and which in any case is only somewhat lower than the supply voltage Von, leaving a high remaining voltage which after that time decreases more slowly over time.

In other words, it has been observed that the manner in which the remaining voltage in the electrodes behaves when they are disconnected, for example during the intermittent periods in which power is supplied to the salt water chlorinator, varies significantly in the case in which the electrodes are new with respect to the case in which said electrodes are old and close to the end of their service life.

Therefore, from the time the electrodes are new until right before the end of their service life, the remaining voltage in the electrodes is virtually constant and has a very low value compared with that of the supply voltage. However, when said service life is about to end, the remaining voltage of the electrodes takes on a substantially higher value, only somewhat lower than the supply voltage.

On the other hand, given that in the method herein proposed the measurement of the remaining voltage in the electrodes is performed upon cutting off the electric power supply of the system, other factors such as the lack of salt, factors which affect the voltage measurements while the salt water chlorinator is being electrically powered, i.e., in operation, do not affect it.

Based on this phenomenon, a reliable and low-cost method for determining the service life status of the electrodes of a salt water chlorinator solving the problems of the state of the art mentioned above is described in the present invention.

Specifically, for a salt water chlorinator in operation the method of the invention comprises the steps of:

- Interrupting the electric power supply of the salt water chlorinator and measuring the value of the remaining voltage VRN in the electrodes of the chlorinator when said electrodes are at the beginning of their service life;
- storing the value of the remaining voltage in the electrodes VRN of the preceding step;
- measuring every so often the value of the remaining voltage VR in the electrodes of the chlorinator at the time of interrupting the electric power supply of the chlorinator VR,
- comparing the value of the remaining voltage VR in the electrodes obtained in the preceding step with the stored value of the remaining voltage VRN, and
- in the event that VR is substantially greater than VRN, activating an alarm signal for the user indicating the need to replace the electrodes.

Lastly, one of the advantages of the method of the present invention is that it allows being applied and coupled to any installation that is already in operation, which is an important advantage in and of itself.

Therefore, the present invention also includes a salt water chlorination system capable of controlling the service life status of the electrodes according to the described method and as it is described in the claims.

Brief Description of the Drawings

To complement the description that is being made and for the purpose of helping to better understand the features of the invention, a set of drawings is attached to the present specification as an integral part thereof, in which the following is depicted with an illustrative and non-limiting character:

Figure 1 shows a schematic graph of the intermittent manner of supplying power to the electrodes of a salt water chlorinator over time, according to an example of chlorine production for a specific volume of water to be purified.
Figure 2a shows a schematic depiction of the value of the remaining voltage in the case of new electrodes during one of the intermittent shut-downs of the electric power supply of the salt water chlorinator shown in Figure 1.

Figure 2b shows a schematic depiction of the value of the remaining voltage in the case of old electrodes during one of the intermittent shut-downs of the electric power supply of the salt water chlorinator shown in Figure 1.

Preferred Embodiment of the Invention

In view of said Figures 1 to 2b and according to the numbering used, a preferred embodiment of the invention can be seen therein, said embodiment comprising the parts and elements indicated and described in detail below.

Specifically, according to a possible embodiment of the invention, the method for determining the service life status of the electrodes in a salt water chlorinator comprises the steps of:

i. Interrupting the electric power supply of the salt water chlorinator in an instant of time TVoff and measuring the value of the remaining voltage VRN in the electrodes of the chlorinator when said electrodes are at the beginning of their service life.

According to a preferred embodiment, the value of the remaining voltage VRN is measured during the first ten milliseconds after disconnection, optimally after 1 millisecond.

Nevertheless, also according to a preferred embodiment, in order to assure that the value of VRN is the correct value and is not affected by user error or by initial, unstable measurements in said voltage, the method of the present invention contemplates the measurement of a series of initial values of the remaining voltage for the purpose of setting the lowest stable value obtained in said series as a reference value VRN.

To that end, a minimum percent variation range could be established, for example, such that when a significant number X of said values of the series are within said variation range, the arithmetic mean of all those X significant values is considered the reference value VRN.

ii. Storing the value of the remaining voltage in the electrodes VRN of the preceding step in external and/or internal data storage means.

iii. Measuring every so often the value of the remaining voltage VR in the electrodes of the chlorinator at the time of interrupting their electric power supply.

In other words, once the chlorinator starts operating and the value VRN indicated in the preceding steps is stored, during normal operation of the chlorinator measurements of the remaining voltage VR will be taken every so often.

As explained above, this measurement is performed once the electric power supply of the chlorinator at the time TVoff has been interrupted. So in the event that the chlorinator is in operation, said interruption of the power supply and the subsequent measurement of the value of the remaining voltage may be performed during the inactive periods of the work cycles, such as that shown in Figure 1, for example. In other words shut-downs or breaks in the supply of current to the chlorinator will be taken advantage of to perform the measurement of the value of the remaining voltage.

Nevertheless, said measurement may also be performed at any of the times TVoff in which the chlorinator is disconnected from the power supply, for example, to completely disconnect the system in the event that the installation in which it is coupled, for example a swimming pool, is not going to be used for a given time.

On the other hand, according to a preferred embodiment, the disconnection of the power supply will be done such that both the anode and the cathode are disconnected in an omnipolar manner, i.e., simultaneously, for the purpose of avoiding leakage currents which are discharged by the electrode and distort the measurement of the remaining voltage VR. In other words, if the anode and cathode are not electrically disconnected in a complete and simultaneous manner in said instant TVoff, the electrodes will lose charges through leakage currents during the cut-off that will prevent obtaining a value of the remaining voltage.

iv. Comparing the value of the remaining voltage VR in the electrodes obtained in the preceding step with the stored value of the remaining voltage VRN for determining if the former is substantially greater than the latter. Specifically, the determination of whether or not the value of VM is substantially greater than the value of VRN will depend on each particular case, since both values will depend on the power of the power supply feeding the chlorinator, which will also be a consequence of the number and/or power of the plates forming the electrodes.

So by way of example two tests performed for different electrodes with the approximate following values can be mentioned:

|      | Electrode 1 | Electrode 2 |
| --- | --- | --- |
| Von  | 25.6 v | 31.5 v |
| VRN  | 5 v | 6 v |
| VR   | 16.4 v | 28 v |

It can be seen from the preceding table that the value VR is indeed substantially greater than the value VRN. Specifically, it can be seen that while VRN is about 1/5 that of Von in both cases, VR is 3/5 greater than Von. So on a practical level, it could be considered that the value VR is substantially greater than the value VRN when

$$VR > 3\ VRN$$

Therefore once the value VRN is stored, the system must simply compare this value with the obtained measurement of VR and trigger the alarm upon detecting a value of remaining voltage VR that is three times that of said stored value VRN. Likewise, given that the value VR will remain the same as the VRN until the moment when the electrode is close to the end of its service life, taking on a value above 3 VRN, detecting an increase by, for example, 2 VRN would be enough because this would also mean the end of the service life of the electrode.

So, for example, for the case of an electrode or X electrodes with supply voltage Von of 15 v and where the value of the remaining voltage VRN at the beginning of their service life is 3 v, according to the following table:

| Von | 15 v |
|-----|------|
| VRN | 3 v  |

The system must simply activate an alarm signal for the user upon detecting

$$VR > 2\ VRN$$

which for this specific case could be set at, for example, 8 volts.

In other words, for the case of the example, the method of the invention would trigger an alarm for notifying the user of the need to replace the electrodes when an increase by 5V, i.e., when VR=VRN+5V, is detected.

v. In the event that VR is substantially greater than VRN, activating an alarm signal for the user indicating the need to replace the electrodes.

On the other hand, the present invention also describes (even though it is not depicted in the drawings) a salt water chlorination system capable of controlling the service life status of the electrodes according to the method described above.

Specifically, salt water chlorination systems, for example for swimming pools are known in the state of the art, and they typically comprise the following main elements:

- a filter,
- a pump,
- a control and/or operating panel,
- an electrolysis cell or chlorinator which in turn comprises the electrodes which, when supplied with electrical power, produce the anodic-cathodic reaction breaking up the salt molecules and making the chemical reaction which generates sodium hypochlorite NaClO ions as a sterilizing agent as explained above possible, and
- an electric power supply.

Furthermore, for the purpose of being able to measure the remaining voltage in the electrodes VRN/VR and apply the method described above, the chlorination system of the invention comprises:

- a voltage measuring circuit independent of the power supply,
- a quick electrode disconnect equipment based on, for example, relays and/or MOSFET transistors, that allows electrically disconnecting both the anode and the cathode simultaneously for the purpose of avoiding leakage currents that are discharged by the electrode and distort the measurement of the remaining voltage VR,
- data storage means for storing both the measured value of VRN and that of the instant of time TVoff in which the measurement is performed, or other values such as temperature, salinity, etc., needed for the operation of the system, which can be internal included in, for example, the control panel, or external, with wireless communication via Bluetooth, Wi-Fi, etc., and
- data processing and calculation means, such as a microprocessor, for example, in which the corresponding software is run and which is housed in the control and/or operating panel or in a independent device, for making the comparison between the stored values of the remaining voltage in the electrodes VRN when these are new and the subsequently measured values VR and generating an alarm signal, messages for the user, information about the system, etc., if needed.

Lastly, according to a possible embodiment the system of the invention may comprise an activation button for activating the measuring system, integrated in the control or operating panel and/or external to same, such that the user can force the chlorinator to disconnect and thus check the service life status of the electrodes at any time, without waiting for said disconnection to occur in a scheduled or automatic manner.

**Claims**

1. Method for determining the service life status of the electrodes of a salt water chlorinator, **characterized in that** it comprises the steps of:

   i. interrupting the electric power supply of the salt water chlorinator in an instant of time TVoff and measuring the value of the remaining voltage VRN in the electrodes of the chlorinator when said electrodes are at the beginning of their service life;
   ii. storing the value of the remaining voltage in the electrodes VRN of the preceding step in data storage means;
   iii. measuring every so often the value of the remaining voltage VR in the electrodes of the chlorinator at the time of interrupting their electric power supply;
   iv. comparing the value of the remaining voltage VR in the electrodes obtained in the preceding step with the stored value of the remaining voltage VRN for determining if the former is substantially greater than the latter;
   v. in the event that VR is substantially greater than VRN, activating an alarm signal for the user indicating the need to replace the electrodes.

2. Method according to claim 1, **characterized in that** the interruption of the power supply for measuring the value of the voltage VR every so often is performed by simultaneously disconnecting the anode and the cathode of the electrodes to avoid leakage currents.

3. Method according to claim 2, **characterized in that** the measurement of the value of the voltage VR is performed at any of the times TVoff during the inactive periods of the work cycles of the chlorinator.

4. Method according to claim 2, **characterized in that** the measurement of the value of the voltage VR is performed at any of the times TVoff in which the chlorinator is disconnected from the power supply for a period of inactivity during which the installation to which the chlorinator is coupled is not going to be used for a given time.

5. Method according to any of the preceding claims, **characterized in that** to establish the value of the remaining voltage in the electrodes VRN the measurement of a series of initial values of the remaining voltage is performed for the purpose of setting the lowest stable value obtained in said series as a reference value VRN.

6. Method according to any of the preceding claims, **characterized in that** the alarm signal for the user indicating the need to replace the electrodes is activated when VR > 2 VRN.

7. Method according to any of claims 1 to 5, **characterized in that** the alarm signal for the user indicating the need to replace the electrodes is activated when VR > 3 VRN.

8. Method according to any of the preceding claims, **characterized in that** the value of the remaining voltage VRN is measured during the first ten milliseconds after disconnection.

9. Salt water chlorination system including a chlorinator with control of the service life status of the electrodes according to the method of claims 1 to 8, comprising:

   - a filter,
   - a pump,
   - a control and/or operating panel,
   - an electrolysis cell or chlorinator which in turn comprises the electrodes which, when supplied with electrical power, produce an anodic-cathodic reaction or electrolysis, which generates a sterilizing agent, and
   - an electric power supply;

   **characterized in that** it further comprises:

- a measuring circuit for measuring the remaining voltage in the electrodes,
- quick electrode disconnect equipment that allows electrically and simultaneously disconnecting the anode and the cathode,
- data storage means for storing the value of the remaining voltage in the new electrodes upon being disconnected VRN, and
- data processing and calculation means for making the comparison between the stored value VRN and a value of the remaining voltage in the electrodes VR measured and generating an alarm signal if needed.

10. Salt water chlorination system according to claim 9, **characterized in that** the voltage measuring circuit is independent of the power supply.

11. Salt water chlorination system according to claim 9 or 10, **characterized in that** the data storage means are internal and are included in the control panel.

12. Salt water chlorination system according to claim 9 or 10, **characterized in that** the data storage means are external to the system and communicate with the control panel through wireless means.

13. Salt water chlorination system according to any of claims 9 to 12, **characterized in that** the quick disconnect equipment is based on relays and/or MOSFET transistors.

14. Salt water chlorination system according to any of claims 9 to 13, **characterized in that** the data processing and calculation means comprise a microprocessor in which software is run and which is housed in the control and/or operating panel or in an independent device.

15. Salt water chlorination system according to any of claims 9 to 14, **characterized in that** it comprises a button so that the user can force the chlorinator to disconnect and said user can check the service life status of the electrodes at any time.

**FIG. 1**

FIG. 2a

FIG. 2b

VRN << VR

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/087449 A1 (BENEDETTO MARIACHIARA [IT]) 11 April 2013 (2013-04-11) | 9-15 | INV. C25B1/26 C25B1/02 C25B15/02 C02F1/467 C02F1/461 C02F103/42 |
| A | * the whole document * | 1-8 | |

TECHNICAL FIELDS
SEARCHED      (IPC)

C02F
C25B

The present search report has been drawn up for all claims

| Place of search | Date of completion of the search | Examiner |
|---|---|---|
| Munich | 18 December 2017 | Ritter, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 1335

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2017

| Patent document cited in search report | | Publication date | Patent family member(s) | | | Publication date |
|---|---|---|---|---|---|---|
| US 2013087449 | A1 | 11-04-2013 | AU | 2011267000 | A1 | 08-11-2012 |
| | | | CL | 2012003399 | A1 | 28-06-2013 |
| | | | CN | 102892714 | A | 23-01-2013 |
| | | | EA | 201291313 | A1 | 30-04-2013 |
| | | | EP | 2582633 | A1 | 24-04-2013 |
| | | | ES | 2528009 | T3 | 03-02-2015 |
| | | | HK | 1181029 | A1 | 20-11-2015 |
| | | | IL | 222675 | A | 31-07-2016 |
| | | | JP | 5841138 | B2 | 13-01-2016 |
| | | | JP | 2013534567 | A | 05-09-2013 |
| | | | KR | 20130121689 | A | 06-11-2013 |
| | | | TW | 201200635 | A | 01-01-2012 |
| | | | US | 2013087449 | A1 | 11-04-2013 |
| | | | WO | 2011157812 | A1 | 22-12-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201132212 A

- WO 2011157811 A